# EUROPÄISCHE PATENTSCHRIFT

(11) **EP 2 223 778 B1**
(45) Veröffentlichungstag und Bekanntmachung des Hinweises auf die Patenterteilung: **25.11.2015**
(21) Anmeldenummer: 10001084.2
(22) Anmeldetag: 03.02.2010
(51) Int. Cl.: B25F 5/00, A01G 3/053, B23D 59/00, B27B 17/08

(54) **Akkubetriebenes, handgeführtes Arbeitsgerät mit einem Gashebel**
Battery-operated, hand-held work device with a throttle lever
Appareil de travail portatif fonctionnant sur batterie et doté d'une bielle

(30) Priorität: 27.02.2009 DE 102009012181
(43) Veröffentlichungstag der Anmeldung: 01.09.2010
(73) Patentinhaber: Andreas Stihl AG & Co. KG, 71336 Waiblingen (DE)
(72) Erfinder: Liebhard, Gernot, 71332 Waiblingen (DE); Hamersmit, Ante, 71332 Waiblingen (DE)
(74) Vertreter: Wasmuth, Rolf

(56) Entgegenhaltungen:
- EP-A1- 1 510 294
- EP-A1- 1 733 612
- DE-A1- 4 421 746
- US-A1- 2004 041 531
- US-A1- 2008 235 957

## Beschreibung

Die Erfindung betrifft ein handgeführtes Arbeitsgerät, insbesondere ein tragbares, handgeführtes Arbeitsgerät wie eine Heckenschere, eine Motorkettensäge, einen Freischneider oder dgl. nach dem Oberbegriff des Anspruchs 1.

Tragbare, handgeführte Arbeitsgeräte mit einem Akkupack als Energiequelle sind bekannt. So zeigt die US 2007/0240892 A1 ein tragbares, handgeführtes Arbeitsgerät in verschiedenen Ausbildungen als Motorkettensäge, Heckenschere, Freischneider und dgl.. Im Gerätegehäuse ist ein elektrischer Antriebsmotor mit einem zugeordneten Antrieb für ein Arbeitswerkzeug vorgesehen, wobei das Gerätegehäuse einen Akkupack umfasst, der über eine entsprechende elektrische Steuerung mit dem Antriebsmotor verbunden ist. Über einen ersten, hinteren Handgriff mit einem Bedienelement wird das Arbeitsgerät geführt und der Antriebsmotor gesteuert, während ein zweiter, vorderer Handgriff durch die zweite Hand des Benutzers gegriffen wird, um das Arbeitsgerät zu halten.

Die Ausführung eines derartigen Arbeitsgerätes mit einem akkubetriebenen Elektromotor stellt eine besondere Herausforderung dar, da einerseits eine ausreichende Antriebsleistung zur Verfügung gestellt werden muss und andererseits eine ausreichende Betriebsdauer erforderlich ist. Die zur Verfügung zu stellende elektrische Energie erfordert entsprechende Akkupacks aus Akkuzellen geeigneten chemischen Aufbaus.

Aus der EP 1 510 294 A1 ist ein Schrauber mit einem Akkupack als Energiequelle bekannt, der über ein elektrisches Stellglied in Betrieb genommen wird, der einen mechanisch ausgebildeten Totweg aufweist. Erst nach Überwinden des Totwegs gibt das Stellglied ein Ausgangssignal an die Steuerungselektronik ab, über die der Elektromotor sprungartig mit einer Startdrehzahl in Betrieb genommen wird. Der Totweg des Stellgliedes ist konstruktiv ausgeführt, so dass bei einer Anpassung des Totwegs z. B. an den Einsatzbereich des Schraubers das Stellglied ausgetauscht werden muss.

Aus der US 2004/0041531 A1 ist ein Bedienelement bekannt, welches auf ein Stellglied wirkt, das aus mehreren Schaltern zusammengesetzt ist. Die Schalter sind aus einer Widerstandskaskade gebildet, wobei jeder Schalterstellung eine vorgegebene Drehzahl des Elektromotors zugeordnet ist. Auch hier ist die konstruktive Gestaltung so vorgesehen, dass das Stellglied in einem ersten Hubbereich kein elektrisches Signal abgibt.

Die Betriebsdauer derartiger Geräte hängt wesentlich davon ab, wie effizient die im Akkupack gespeicherte Energie bei geforderter Abgabeleistung genutzt wird.

Der Erfindung liegt die Aufgabe zugrunde, ein akkubetriebenes, handgeführtes Arbeitsgerät derart weiterzubilden, dass mit technisch einfachen Mitteln die Effizienz der Nutzung einer Akkuladung in verschiedenen Einsatzbereichen eines Arbeitsgerätes verbessert ist.

Die Aufgabe wird erfindungsgemäß nach den kennzeichnenden Merkmalen des Anspruchs 1 gelöst.

Der Gashebel des Arbeitsgerätes ist mit einem elektrischen Stellglied verbunden, dessen stellungsabhängiges Ausgangssignal der Steuerungselektronik zugeführt ist. Die Steuerungselektronik erhält so ein Stellungssignal der Hublage des Gashebels und führt in Abhängigkeit der Hublage des Gashebels dem Antriebsmotor die notwendige Energie zu. Nach der Erfindung ist vorgesehen, in einem ersten, an die Außerbetriebsstellung (Ruhestellung) anschließenden Hubbereich des als Gashebel ausgebildeten Betätigungselementes die zuzumessende elektrische Energie mit "Null" zu bemessen, d. h., keine elektrische Energie zuzuführen.

Damit wird erreicht, dass der Benutzer signifikant den Gashebel niederdrücken muss, um den Antriebsmotor in Betrieb zu nehmen. Der Vorteil besteht darin, dass die verluststarke Anfahrbewegung des Antriebsmotors rasch durchfahren wird, da der Motor gleich zu Beginn mit einem entsprechend starken Spannungssignal angesteuert wird. Die Betriebsphase des Anfahrens kann kurz gehalten werden, so dass die in der Anfahrphase des Motors auftretenden elektrischen Verluste klein gehalten werden können. Die im Akkupack gespeicherte Ladung wird effizienter eingesetzt; die Betriebsdauer des akkubetriebenen Arbeitsgerätes ist erhöht.

Vorteilhaft ist das Bedienelement um eine Drehachse verschwenkbar, wobei sich der Hubbereich des Betätigungselementes, über den keine Energie zugeführt wird, über einen Winkel von 0° bis 10°, insbesondere bis etwa 7° erstreckt. Erst nach Durchfahren dieses ersten Hubbereichs als "Totweg", also im Übergang von dem ersten, "toten" Hubbereich in einen folgenden, zweiten Hubbereich wird der Motor sprunghaft auf einen vorgegebenen Leistungswert eingestellt, der zweckmäßig etwa 30% der Motornennspannung entspricht. Vorteilhaft wird als Ansteuerungssignal des Motors ein zweckmäßig in der Pulsweite moduliertes Signal zugeführt. Um die Verluste gering zu halten, ist das Ansteuerungssignal ein Gleichspannungssignal, wobei der elektrische Antriebsmotor als EC-Motor ausgeführt ist.

Nach einer weiteren Erfindung ist im Leistungsstromkreis der Steuerungselektronik mindestens ein mechanischer Schalter angeordnet, der den Leistungsstromkreis ein- bzw. ausschaltet. Ein derartiger Schalter ist zweckmäßig Bauteil einer Zweihandsicherung, um die Betriebssicherheit mit einem akkubetriebenen, handgeführten Arbeitsgerät zu erhöhen.

Die Steuerungselektronik und die Schaltstellung des Schalters sind derart aufeinander abgestimmt, dass der Schalter jeweils stromlos öffnet und schließt. Dies bedeutet, dass der Leistungsstromkreis im Schaltmoment des Schalters stromlos ist und der Schalter - im normalen Betrieb - erst dann geöffnet wird, wenn der Strom im Leistungsstromkreis zu Null geworden ist. Damit können für eine Zweihandsicherung einfache Schalter eingesetzt werden, deren Kontakte gegen Überlast und die damit verbundenen Folgen wie Kontaktbrand geschützt sind.

Weitere Merkmale der Erfindung ergeben sich aus den weiteren Ansprüchen, der Beschreibung und der Zeichnung, in der ein im Einzelnen beschriebenes Ausführungsbeispiel der Erfindung dargestellt ist. Es zeigen:
- Fig. 1: in schematischer Seitenansicht ein handgeführtes Arbeitsgerät am Beispiel einer Motorkettensäge,
- Fig. 2: eine schematische Darstellung eines Leistungsstrom kreises mit Steuerungselektronik für einen Bürsten motor,
- Fig. 3: eine schematische Darstellung einer Steuerungselektronik für einen bürstenlosen Elektromotor,
- Fig. 4: eine pulsweitenmodulierte Signalfolge,
- Fig. 5: ein Diagramm der Pulsweite über dem Schwenkwinkel des Bedienelementes,
- Fig. 6: eine schematische Seitenansicht einer Heckenschere.

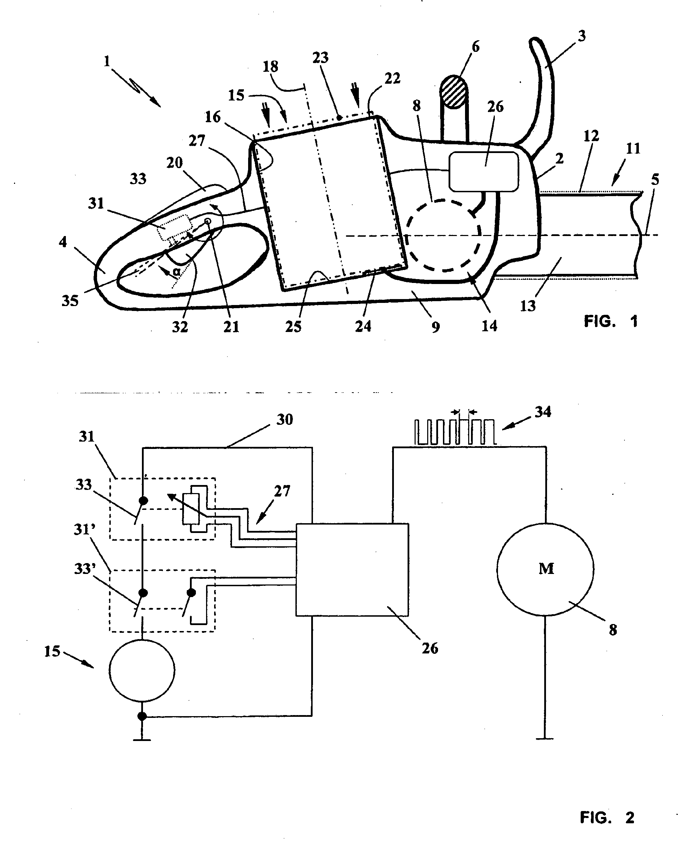

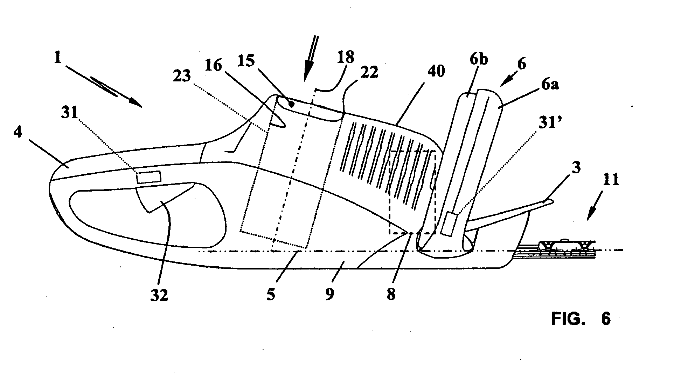

Das in den Zeichnungen dargestellte Ausführungsbeispiel eines handgeführten Arbeitsgerätes 1 ist in Fig. 1 als Motorkettensäge 2 und in Fig. 6 als Heckenschere 40 ausgeführt. Die Ausführungsbeispiele stehen auch als Beispiele für andere Arbeitsgeräte wie einen Trennschleifer, einen Freischneider, einen Kantenscheider, einen Hochentaster, ein Blasgerät, ein Sprühgerät, ein Sauggerät, ein Erdbohrgerät, ein Kombimotorgerät für multifunktionelle Vorsätze, ein Kehrgerät, eine Motorhacke, eine Bodenfräse, einen Hochdruckreiniger, einen Rasenmäher, einen Vertikutierer, einen Häcksler, einen Nass- oder Trockensauger oder dgl. insbesondere handgeführte Arbeitsgeräte.

Ein Benutzer führt das Arbeitsgerät 1 mittels zwei Handgriffen 4 und 6, wobei ein erster, hinterer Handgriff 4 von einer ersten Hand eines Benutzers und ein zweiter, vorderer Handgriff 6 von einer zweiten Hand des Benutzers gegriffen ist. Die dargestellten, tragbaren, handgeführten Arbeitsgeräte 1 sind so genannte "Zweihandgeräte", welche von beiden Händen eines Benutzers zu greifen sind, um das Arbeitsgerät 1 zu halten und zu führen.

Der hintere Handgriff 4 des Arbeitsgerätes 1 (Fig. 1 und 6) ist bevorzugt einteilig mit dem Gerätegehäuse 9 ausgebildet und besteht insbesondere aus zusammengefügten Griffschalen. Der vordere Handgriff 6 ist als Bügelgriff ausgeführt, der im Wesentlichen quer zu einer Maschinenlängsachse 5 liegt. Der hintere Handgriff 4 ist in Richtung der Maschinenlängsachse 5 ausgerichtet. Vor dem vorderen Handgriff 6 ist ein Handschutz 3 angeordnet, der bei einer Motorsäge 2 (Fig. 1) zweckmäßig als mechanischer Auslöser für eine Sicherheitsbremse dient, mit der das Arbeitswerkzeug 11 in Sekundenbruchteilen abgebremst und stillgesetzt werden kann.

Bei einer Heckenschere nach Fig. 6 ist der vordere Bügelgriff 6 zweckmäßig zweiteilig ausgebildet, wobei die Teilhälften 6a, 6b zueinander beweglich sind, um einen zwischen ihnen angeordneten Schalter 31' einer elektrischen Zweihandsicherung zu betätigen. Der Schalter 31' kann direkt von den Teilen des Bügelgriffs betätigt werden oder auch mittelbar über Übertragungselemente wie z. B. einen Schaltbügel oder dgl..

Im Gerätegehäuse 9 des Arbeitsgerätes 1 ist ein elektrischer Antriebsmotor 8 sowie - bei einer Motorsäge 2 - ein Abtrieb 14 mit einem Kettenritzel für ein Arbeitswerkzeug 11 aufgenommen. Im Ausführungsbeispiel nach Fig. 1 ist das Arbeitswerkzeug 11 eine Sägekette 12, die in einer äußeren Umfangsnut einer Führungsschiene 13 umläuft. Im Ausführungsbeispiel nach Fig. 6 ist das Arbeitswerkzeug 11 ein Messerbalken mit hin- und hergehenden Schermessern.

Der elektrische Antriebsmotor 8 hat eine elektrische Aufnahmeleistung von mehr als 150 Watt, vorzugsweise eine elektrische Aufnahmeleistung im Bereich von 500 Watt bis 5.000 Watt hat. Der Motor kann zweckmäßig als Bürstenmotor ausgebildet sein; vorzugsweise ist der Motor als Hochleistungsmotor ausgeführt, insbesondere als EC-Motor bzw. Brushless-Motor ausgebildet

Im Gerätegehäuse 9 des Arbeitsgerätes 1 ist ein Aufnahmeschacht 16 für einen Akkupack 15 ausgebildet, wobei der Aufnahmeschacht 16 im Wesentlichen dem Volumen des Akkupacks 15 entspricht, so dass der Akkupack 15 - wie in den Figuren 1 und 6 strichliert dargestellt - im Wesentlichen vollständig im Aufnahmeschacht 16 des Gerätegehäuses 9 aufgenommen ist.

Der Akkupack 15 besteht aus einem Packgehäuse 23, in dem eine Vielzahl von Zellen angeordnet ist. Die Akkuzellen sind wieder aufladbare Zellen, z. B. Akkuzellen wie eine NiCd-Zelle (Nickel-Cadmium-Zelle), eine NiMh-Zelle (Nickel-Metallhydrid-Zelle), eine LiIo-Zelle (Lithium-Ionen-Zelle), eine LiPo-Zelle (Lithium-Polymer-Zelle), eine LiFePo4-Zelle (Lithium-Eisen-Phosphat-Zelle), eine Lithium-Titanat-Zelle oder dgl. aufgebaute Zellen. Die Zellenspannung einer einzelnen Zelle liegt zweckmäßig im Bereich zwischen 2 Volt und 5 Volt, vorzugsweise bei etwa 3,6 Volt bis 3,7 Volt. Mit derartigen Zellen können je nach der ausgeführten Schaltung (Reihenschaltung, Parallelschaltung) Akkupackspannungen von 12 bis 150 Volt, vorzugsweise 20 Volt bis 51 Volt bereitgestellt werden. Im Ausführungsbeispiel ist eine Leerlaufspannung des Akkupacks 15 abhängig vom Ladezustand von 20 Volt bis 42 Volt vorgesehen.

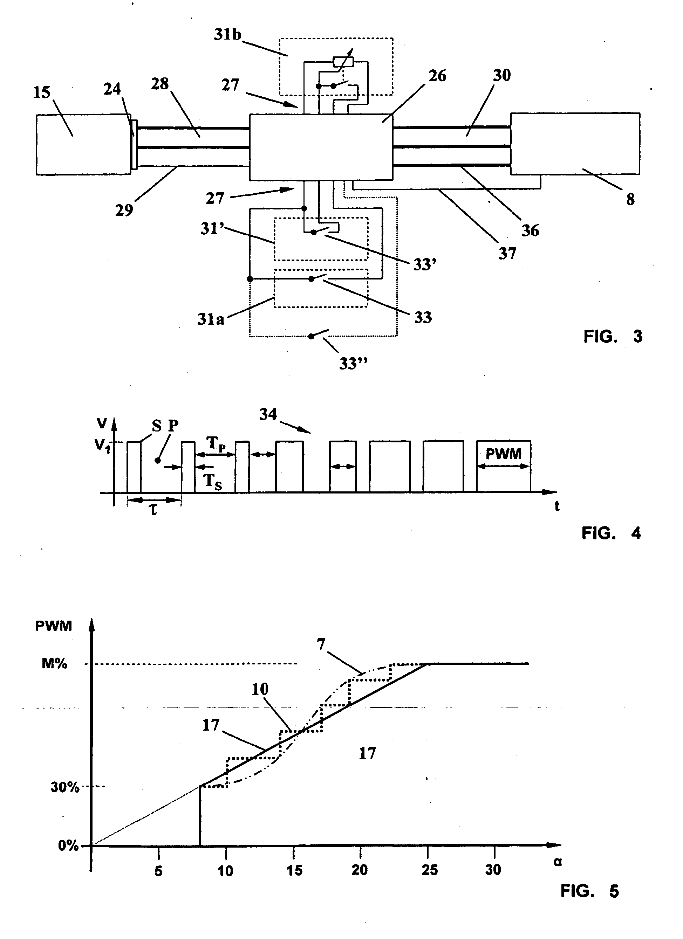

Der im Packgehäuse 23 verdrahtete Zellenblock aus Einzelzellen wird über eine äußere Anschlussplatte 24 elektrisch kontaktiert, wobei die Anschlussplatte 24 am Boden 25 des Aufnahmeschachtes 16 vorgesehen ist. Die Anschlussplatte 24 liegt somit der Einschuböffnung 22 des Aufnahmeschachtes 16 gegenüber, so dass beim Einschieben des Akkupacks 15 in Richtung seiner Längsachse 18 die elektrische Kontaktierung des Akkupacks 15 im Endabschnitt des Einschubweges erfolgt. Die Anschlussplatte 24 steht mit einer Steuerelektronik 26 in Verbindung, an die der elektrische Antriebsmotor 8 über einen Leistungsstromkreis 30 (Fig. 2, 3) angeschlossen ist. Die Steuerelektronik 26 setzt die über eine Steuerleitung 27 empfangenen Steuerbefehle eines zugleich als Stellungssensor ausgebildeten elektrischen Schalt- und Stellgliedes 31 bzw. 31a, 31b (Fig. 3) um und steuert den Antriebsmotor 8 entsprechend der Hubstellung eines als Gashebel ausgeführten Betätigungselementes 32. Hierzu wird mittels der Steuerelektronik 26 die Gleichspannung des Akkupacks 15 als pulsweitenmodulierte Signalfolge 34 (Fig. 4) dem Antriebsmotor 8 zugeführt, wobei die Signalstärke eine Spannung V₁ hat, die kleiner als die Akkuspannung ist. Die Akkupackspannung beträgt je nach Ladezustand zweckmäßig 20 bis 42 Volt.

Eine Periodendauer τ der pulsweitenmodulierten Signalfolge 34 setzt sich zusammen aus dem Signal S selbst mit einer Signaldauer T_{S} und einer Signalpause P mit einer Pausendauer T_{P}. Die Signaldauer T_{S} wird bei gleichbleibender Periodendauer τ in Abhängigkeit der geforderten Leistung von 0% bis M% variiert. Bei 0% ist die Signaldauer T_{S} gleich Null; bei M% entspricht die Signaldauer T_{S} einer mittleren vorgegebenen Motorspannung von z. B. 26 Volt. Für die Periodendauer τ gilt: T_{S} + T_{P} = τ.

In Fig. 2 ist die Schaltung eines als Bürstenmotor ausgeführten Elektromotors 8 gezeigt, dessen Leistungsstromkreis 30 durch Schalter 33 und 33' zu unterbrechen ist. Die Schalter 33, 33' liegen unmittelbar im Leistungskreis 30, so dass bei geöffneten Schaltern 33 bzw. 33' der Motor 8 stromlos bleibt, auch wenn z. B. das als verschwenkbarer Gashebel ausgebildete Betätigungselement 32 alleine niedergedrückt wird. Im gezeigten Ausführungsbeispiel ist dem Gashebel eine Gashebelsperre 20 zugeordnet, der auf der dem Gashebel abgewandten Seite am Handgriff 4 angeordnet ist. Der Gashebel und die Gashebelsperre 20 stehen derart in Wechselwirkung zueinander, dass der Gashebel nur bei niedergedrückter Gashebelsperre 20 betätigt werden kann.

Der Schalter 33' ist Teil eines Schaltgliedes 31' und kann dem vorderen Handgriff 6 zugeordnet sein, wie dies im Ausführungsbeispiel einer Heckenschere 40 entsprechend Fig. 6 schematisch gezeigt ist. Der Antriebsmotor 8 kann dann und nur dann in Betrieb gesetzt werden, wenn der Benutzer mit der einen Hand den hinteren Handgriff 4 greift und mit der anderen Hand den vorderen Handgriff 6. Erst nach Ergreifen der Handgriffe 4, 6 werden die Schalter 33 und 33' geschlossen, wobei gleichzeitig die mechanische Sperre zwischen der Gashebelsperre 20 und dem Gashebel gelöst wird, so dass der Benutzer das als Gashebel ausgebildete Betätigungselement 32 niederdrücken kann.

Hat der Benutzer beide Handgriffe 4.und 6 gegriffen und dabei die Schalter 33 und 33' geschlossen, ist die Gashebelsperre 20 gelöst, so dass er den Gashebel bedienen kann. Der Gashebel 32 wird - wie in Fig. 1 gezeigt - um einen Winkel α in Pfeilrichtung um die Drehachse 21 verschwenkt, wobei das als Stellungssensor ausgebildete Stellglied 31 ein von der Hublage bzw. der Verschwenklage abhängiges Signal über die Steuerleitung 27 an die Steuerelektronik 26 abgibt.

Die Steuerelektronik 26 steuert den elektrischen Antriebsmotor 8 in Abhängigkeit der Hublage des Stellgliedes 31. Die Ansteuerung des Bürstenmotors 8 erfolgt mittels der Steuerelektronik 26 mit dem vom Akkupack 15 zur Verfügung gestellten Gleichstrom (DC), der - wie Fig. 4 zeigt - als pulsweitenmoduliertes Signal 34 zugeführt ist. Durch diese Schaltung wird erreicht, dass die Schalter 33 und 33' im Leistungsstromkreis 30 im normalen Betriebsfall immer stromlos geschlossen werden, so dass die Kontaktbelastung gering und damit Kontaktbrand vermieden ist.

Um die Anfahrverluste des Antriebsmotors 8 zu reduzieren ist vorgesehen, in einem ersten Hubbereich 35 (Fig. 1) des Betätigungselementes 32 die Pulsweite des Signals S auf 0% einzustellen, so dass die im ersten an die Außerbetriebsstellung (Ruhelage) anschließenden Hubbereich 35 dem Elektromotor zugemessene elektrische Energie "Null" ist. Das durch das Betätigungselement 32 angesteuerte Stellglied 31 ist zweckmäßig so ausgelegt, dass der erste "tote" Hubbereich 35 etwa 30 bis 60% des Gesamthubes des Stellgliedes 31 entspricht, insbesondere etwa 40% bis 45% des Gesamthubes.

Zweckmäßig entspricht der erste Hubbereich 35, innerhalb dem dem Antriebsmotor keine Energie zugeführt wird und die Pulsweite T_{S} des Signals S Null ist, einem Drehwinkel des als Gashebel ausgeführten Betätigungselementes 32 von 0° bis 10°, insbesondere bis 7°. Wie Fig. 5 zeigt, wird am Ende des "toten" Hubbereichs 35 die Pulsweite PWM sprunghaft auf einen vorgegebenen Startwert erhöht, z. B. 30% der Motornennleistung bzw. der Motornennspannung erhöht, so dass der Elektromotor 8 kraftvoll anläuft und die verlustreiche Anlaufphase möglichst kurz ist.

Über den weiteren Hubbereich des Gashebels 32 über einen Drehwinkelbereich des Gashebels von bis z. B. 25° bis 30° erfolgt eine Vergrößerung der Pulsweite, bis zum Schluss des Hubbereiches eine Pulseite von M%, die kleiner 100% sein kann. Die Pulsweite der vorgegebenen M% entspricht einer gewünschten maximalen Motorspannung am Elektromotor 8, z. B. einer maximalen Versorgungsspannung von z. B. 26 Volt. In weiten Betriebsbereichen wird daher die Akkuspannung immer größer als die am Motor anliegende Spannung sein; sinkt aufgrund der abnehmenden Ladung die Akkuspannung unter einen Schwellwert von z. B. 28 Volt, wird die Pulsweite PWM gesteuert abgesenkt, so dass der Benutzer eine Reaktion des Elektrogerätes aufgrund der niedrigen Akkuladung erfährt und er Maßnahmen für das weitere Arbeiten treffen kann, wie z. B. Aufladen des Akkupacks oder Einschieben eines Wechselakkus.

Ist als Antriebsmotor 8 ein EC-Motor bzw. Brushless-Motor verwendet, erfolgt eine Ansteuerung mit einer Schaltung gemäß Fig. 3. Im Leistungsstromkreis des Elektromotors 8 sind keine mechanischen Schalter angeordnet; eine Steuerung des Stroms erfolgt vorzugsweise über elektronische Bauelemente wie ein MOSFET (Metall-Oxid-Halbleiter-Feldeffekttransistor) oder dgl. Leistungsbausteine. Der Akkupack 15 ist über den Anschluss 28 an die Kontaktplatte 24 elektrisch direkt mit der Steuerelektronik 26 verbunden, die über elektronische Leistungsbausteine und den Leistungsstromkreis 30 den Elektromotor 8 unmittelbar speist. Über eine Steuerleitung 36 wird der EC-Motor gesteuert, so dass die zum Betrieb des EC-Motors notwendige Ansteuerelektronik in der Steuerelektronik 26 des Arbeitsgerätes 1 integriert sein kann. Sensorleitungen 37 geben der Steuerelektronik eine Rückmeldung über den Feldzustand des bürstenlosen Motors 8. Über eine Signalleitung 29 werden der Steuerelektronik 26 ferner Betriebsdaten des Akkupacks 15 mitgeteilt, um diese bei der Steuerung zu berücksichtigen.

Die Schalter 33 und 33' der Stellglieder 31, 31' sind im Steuerkreis angeordnet und über Steuerleitungen 27 mit der Steuerelektronik 26 verbunden; abhängig vom Schaltzustand der Schalter 33 und 33' bzw. des Stellgliedes 31b wird der Motor 8 angesteuert. Dabei erfolgt eine Leistungssteuerung im Leistungsstromkreis pulsweitenmoduliert in gleicher Weise wie zum Bürstenmotor beschrieben und in den Fig. 4 und 5 dargestellt.

Wie punktiert eingezeichnet, können über die Steuerleitungen 27 weitere Schaltelemente 33" angeschlossen werden, um z. B. den Zustand eines weiteren zum Betrieb des Arbeitsgerätes notwendigen Bauteils an die Steuerelektronik 26 zu melden.

Das Anwachsen der Pulsweite PWM bis auf M% bzw. bis auf die vorgegebene Motorspannung von z. B. 26 Volt kann nach einer zweckmäßig gestalteten Kurve erfolgen. In einem ersten Ausführungsbeispiel ist - wie Fig. 5 in durchgezogener Linie zeigt - das Anwachsen linear und kontinuierlich von 30% auf M% nach der Geraden 17 vorgesehen. Der Benutzer hat somit einen Gashebel 32, mit dem er feinfühlig die Leistung entsprechend dem Bedarf steuern kann.

Es kann auch zweckmäßig sein, das Anwachsen der Pulsweite auf M% nach einer Kurve 7 vorzusehen, wie sie beispielhaft strichliert in Fig. 5 angegeben ist. Auch kann ein treppenförmiges Anwachsen gemäß der Treppenkurve 10 vorteilhaft sein, wie in Fig. 5 punktiert eingezeichnet ist.

Der Wert M ist abhängig von der aktuellen Spannung und damit vom Ladezustand des angeschlossenen Akkupacks 15; bei vollständig geladenem Akkupack 15 liegt eine Akkuspannung von z. B. ca. 42 Volt vor, so dass die Pulsweite auf einen Wert von ca. 60% aufgesteuert wird. Ist der Akkupack stark entladen und hat z. B. noch eine Akkuspannung von nur 30 Volt, wird die Pulsweite auf 85% erhöht, so dass am Motor 8 weiterhin eine Nennspannung von z. B. 26 Volt anliegt. Sinkt die aktuelle Akkuspannung unter einen Schwellwert von z. B. 30 Volt, kann die Pulsweite zielgerichtet reduziert werden, damit der Benutzer eine Reaktion auf die sinkende Akkuspannung feststellen kann.

Das in Fig. 6 dargestellte Arbeitsgerät 1 zeigt eine Heckenschere 40 mit einem Messerbalken als Arbeitswerkzeug 11. Der Grundaufbau der Heckenschere 40 entspricht dem Arbeitsgerät 1 nach Fig. 1, weshalb für gleiche Teile gleiche Bezugszeichen verwendet sind.

## Patentansprüche

1. Handgeführtes Arbeitsgerät, insbesondere tragbares, handgeführtes Arbeitsgerät wie eine Heckenschere, eine Motorkettensäge, ein Freischneider oder dgl., mit mindestens einem an dem Gerätegehäuse (9) festgelegten Handgriff (4, 6), mit einem im Gerätegehäuse (9) angeordneten elektrischen Antriebsmotor (8) und einem Abtrieb (14) für ein Arbeitswerkzeug (11), sowie einem Akkupack (15) zum Betrieb des Arbeitsgerätes (1), mit einem am Handgriff (4) vorgesehenen Bedienelement (32) zum Steuern des Antriebsmotors (8), wobei das Bedienelement (32) auf ein elektrisches Stellglied (31) wirkt, und das Ausgangssignal des elektrischen Stellgliedes (31) einer Steuerungselektronik (26) zugeführt ist, an welcher der Akkupack (15) und über einen Leistungsstromkreis (30) der Antriebsmotor (8) angeschlossen sind, und wobei das als Stellungssensor ausgebildete Stellglied (31) ein von der Hublage bzw. der Verschwenklage des Bedienelementes (32) abhängiges Ausgangssignal über die Steuerleitung (27) an die Steuerelektronik (26) abgibt,
wobei die dem Antriebsmotor (8) zugeführte elektrische Energie in Abhängigkeit der Lage des Bedienelementes (32) von der Steuerungselektronik (26) zugemessen ist, **dadurch gekennzeichnet,**
**dass** das Ansteuerungssignal der Steuerungselektronik (26) zum elektrischen Antriebsmotor (8) eine in der Pulsweite (PWM) modulierte Signalfolge (34) ist,
und die modulierte Signalfolge (34) ein Gleichspannungssignal ist,
**dass** sich eine Periodendauer (τ) der pulsweitenmodulierten Signalfolge (34) aus einem Signal (S) selbst mit einer Signaldauer (T_{S}) und einer Signalpause (P) mit einer Pausendauer (T_{P}) zusammensetzt, und die Signaldauer (T_{S}) bei gleichbleibender Periodendauer (τ) in Abhängigkeit der geforderten Leistung variiert wird,
wobei in einem ersten, an die Außerbetriebsstellung anschließenden "toten" Hubbereich (35) des Bedienelementes (32) die Signaldauer (T_{S}) des Signals (S) der Signalfolge (34) auf "NULL" eingestellt und die von der Steuerungselektronik (26) zugemessene elektrische Energie "Null" ist, und im Übergang von dem ersten Hubbereich (35) auf einen folgenden, zweiten Hubbereich die Pulsweite (PWM) der Signalfolge (34) sprungartig auf einen vorgegebenen Leistungswert eingestellt ist.

2. Arbeitsgerät nach Anspruch 1,
**dadurch gekennzeichnet, dass** der "tote" Hubbereich (35) des Stellgliedes (31) etwa 30% bis 60% des Gesamthubes entspricht.

3. Arbeitsgerät nach Anspruch 2,
**dadurch gekennzeichnet, dass** der "tote" Hubbereich (35) des Stellgliedes (31) etwa 40% bis 45% des Gesamthubes entspricht

4. Arbeitsgerät nach einem der Ansprüche 1 bis 3,
**dadurch gekennzeichnet, dass** das Bedienelement (32) um eine Drehachse (21) verschwenkbar ist und der erste Hubbereich (35) einem Drehwinkel von 0° bis 10° entspricht.

5. Arbeitsgerät nach Anspruch 4,
**dadurch gekennzeichnet, dass** der erste Hubbereich (35) einem Drehwinkel bis etwa 7° entspricht.

6. Arbeitsgerät nach Anspruch 1,
**dadurch gekennzeichnet, dass** der vorgegebene Leistungswert etwa 30% der Nennleistung entspricht.

7. Arbeitsgerät nach einem der Ansprüche 1 bis 6,
**dadurch gekennzeichnet, dass** der elektrische Antriebsmotor (8) ein EC-Motor ist.

8. Arbeitsgerät nach einem der Ansprüche 1 bis 7,
**dadurch gekennzeichnet, dass** dem Handgriff (4, 6) ein Schalter (33') zugeordnet ist, der Bauteil einer Zweihandsicherung ist.

9. Arbeitsgerät nach einem der Ansprüche 1 bis 8,
**dadurch gekennzeichnet, dass** in dem den Arbeitsstrom führenden Leistungsstromkreis (30) der Steuerungselektronik (26) mindestens ein mechanischer Schalter (33, 33') angeordnet ist.

10. Arbeitsgerät nach Anspruch 8 oder 9,
**dadurch gekennzeichnet, dass** die Steuerungselektronik (26) und die Schaltstellung des Schalters (33, 33') derart aufeinander abgestimmt sind, dass der Schalter (33, 33') stromlos schließt und/oder öffnet.

## Claims

1. Hand-held working implement, in particular portable hand-held working implement, such as a hedge cutter, a motorised chainsaw, a free cutter or the like, comprising a handle (4, 6) secured to the implement housing (9), an electric drive motor (8) located in the implement housing (9) and a power take-off (14) for a tool (11) as well as a battery pack (15) for the operation of the working implement (1), and further comprising a control (32) provided on the handle (4) for controlling the drive motor (8), wherein the control (32) acts on an electric actuator (31) and the output signal of the electric actuator (31) is fed to an electronic control unit (26), to which the battery pack (15) and, via a power circuit (30), the drive motor (8) are connected, and wherein the actuator (31), which is designed as a position sensor, transmits to the electronic control unit (26) via the control line (27) an output signal dependent on the stroke or pivoting position of the control (32),
wherein the electric energy supplied to the drive motor (8) is allocated by the electronic control unit (26) as a function of the position of the control (32),
**characterised in that**
the control signal of the electronic control unit (26) for the electric drive motor (8) is a pulse width modulated (PWM) signal sequence (34) and the modulated signal sequence (34) is a DC signal, **in that** a cycle duration (τ) of the pulse width modulated signal sequence (34) is composed of a signal (S) with a signal duration (Tₛ) and a signal interval (P) with an interval duration (Tₚ), and **in that** the signal duration (Tₛ) is varied as a function of the required power at a steady cycle duration (τ), wherein, in a first "dead" stroke range (35) of the control (32) following the cessation of operation, the signal duration (Tₛ) of the signal (S) of the signal sequence (34) is set to "ZERO" and the electric energy allocated by the electronic control unit (26) is "zero", and wherein, in the transition from the first stroke range (35) to a subsequent second stroke range, the pulse width (PW) of the signal sequence (34) jumps to a preset power value.

2. Working implement according to claim 1,
**characterised in that** the "dead" stroke range (35) of the actuator (31) corresponds to approximately 30% to 60% of the total stroke.

3. Working implement according to claim 2,
**characterised in that** the "dead" stroke range (35) of the actuator (31) corresponds to approximately 40% to 45% of the total stroke.

4. Working implement according to any of claims 1 to 3,
**characterised in that** the control (32) is pivotable about an axis of rotation (21) and the first stroke range (35) corresponds to a rotational angle of 0 degrees to 10 degrees.

5. Working implement according to claim 4,
**characterised in that** the first stroke range (35) corresponds to a rotational angle up to approximately 7 degrees.

6. Working implement according to claim 1,
**characterised in that** the preset power value corresponds to approximately 30% of the rated power.

7. Working implement according to any of claims 1 to 6,
**characterised in that** the electric drive motor (8) is an EC motor.

8. Working implement according to any of claims 1 to 7,
**characterised in that** a switch (33'), which is a component of a two-hand safety device, is assigned to the handle (4, 6).

9. Working implement according to any of claims 1 to 8,
**characterised in that** at least one mechanical switch (33, 33') is provided in the power circuit (30) of the electronic control unit (26) which carries the working current.

10. Working implement according to claim 8 or 9,
**characterised in that** the electronic control unit (26) and the switching position of the switch (33, 33') are matched to one another in such a way that the switch (33, 33') closes and/or opens in the absence of current.

## Revendications

1. Appareil électrique tenu à la main, en particulier appareil portatif tenu à la main tel qu'un taille-haie, une tronçonneuse, une débroussailleuse ou autre, avec au moins une poignée (4, 6) fixée au boîtier d'appareil (9), avec un moteur d'entraînement électrique disposé dans le boîtier d'appareil (9), et une sortie (14) pour l'outil (11), et avec une batterie (15) pour faire fonctionner l'appareil (1), avec un élément de manoeuvre (32), prévu sur la poignée, pour commander le moteur d'entraînement (8), étant précisé que l'élément de manoeuvre (32) agit sur un actionneur électrique (31) et que le signal de sortie de l'actionneur électrique (31) est transmis à un système électronique de commande (26) auquel sont reliés la batterie (15) et, par l'intermédiaire d'un circuit de puissance (30), le moteur d'entraînement (8), et que l'actionneur (31), conçu comme un capteur de position, transmet au système électronique de commande (26), par l'intermédiaire de la ligne de commande (27), un signal de sortie qui est fonction de la position de course ou de pivotement de l'élément de manoeuvre (32),
étant précisé que l'énergie électrique fournie au moteur d'entraînement (8) est régulée par le système électronique de commande (26) en fonction de la position de l'élément de manoeuvre (32),
**caractérisé en ce que** le signal de commande du système électronique de commande (26) pour le moteur d'entraînement électrique (8) est une suite de signaux (34) dont la largeur d'impulsion (PWM) est modulée, et la suite de signaux modulée (34) est un signal à tension continue,
**en ce qu'**une période (τ) de la suite de signaux à largeur d'impulsion modulée (34) se compose d'un signal (S) lui-même d'une durée de signal (T_{S}), et d'une pause de signal (P) d'une durée de pause (T_{P}), et la durée de signal (T_{S}), pour une période (τ) constante, est modifiée en fonction de la puissance requise,
étant précisé que dans une première zone de course "morte" (35) de l'élément de manoeuvre (32) qui fait suite à la position d'arrêt, la durée (T_{S}) du signal (S) de la suite de signaux (34) est réglée sur "ZERO" et l'énergie électrique régulée par le système électronique de commande (26) est "zéro", et que dans la transition entre la première zone de course (35) et une seconde zone de course, suivante, la largeur d'impulsion (PWM) de la suite de signaux (34) est réglée brusquement sur une valeur de puissance prédéfinie.

2. Appareil selon la revendication 1,
**caractérisé en ce que** la zone de course "morte" (35) de l'actionneur (31) correspond à peu près à 30 % à 60 % de la course totale.

3. Appareil selon la revendication 2,
**caractérisé en ce que** la zone de course "morte" (35) de l'actionneur correspond à peu près à 30% à 45% de la course totale.

4. Appareil selon l'une des revendications 1 à 3,
**caractérisé en ce que** l'élément de manoeuvre (32) est apte à pivoter sur un axe de rotation (21) et la première zone de course (35) correspond à un angle de rotation de 0° à 10°.

5. Appareil selon la revendication 4,
**caractérisé en ce que** la première zone de course (35) correspond à un angle de rotation jusqu'à environ 7°.

6. Appareil selon la revendication 1,
**caractérisé en ce que** la valeur de puissance prédéfinie correspond à peu près à 30% de la puissance nominale.

7. Appareil selon l'une des revendications 1 à 6,
**caractérisé en ce que** le moteur d'entraînement électrique (8) est un moteur ECM.

8. Appareil selon l'une des revendications 1 à 7,
**caractérisé en ce qu'**un commutateur (33') qui est un composant d'une commande à deux mains est associé à la poignée (4, 6).

9. Appareil selon l'une des revendications 1 à 8,
**caractérisé en ce que** dans le circuit de puissance (30) de circulation du courant de travail du système électronique de commande (26), il est prévu au moins un commutateur mécanique (33, 33').

10. Appareil selon la revendication 8 ou 9,
**caractérisé en ce que** le système électronique de commande (26) et la position de commutation du commutateur (33, 33') sont adaptés l'un à l'autre de telle sorte que le commutateur (33, 33') se ferme et/ou s'ouvre sans courant.
